# EUROPEAN PATENT SPECIFICATION

(11) **EP 3 385 333 B1**
(45) Date of publication and mention of the grant of the patent: **17.02.2021**
(21) Application number: 16870646.3
(22) Date of filing: 29.11.2016
(51) Int. Cl.: C08L 101/14, B29C 67/00, B33Y 10/00, B33Y 70/00, C08K 5/09, C08K 5/1545, C08L 29/04, C08K 13/02, B29C 64/118

(54) **WATER-DISINTEGRABLE RESIN COMPOSITION, AND THREE-DIMENSIONAL MODELING MATERIAL SET AND METHOD FOR PRODUCING THREE-DIMENSIONAL MODEL USING SAME**
IN WASSER LÖSLICHE HARZZUSAMMENSETZUNG UND MATERIALSET FÜR DREIDIMENSIONALE MODELLIERUNG UND VERFAHREN ZUR HERSTELLUNG EINES DREIDIMENSIONALEN MODELLS DAMIT
COMPOSITION DE RÉSINE DÉSINTÉGRABLE DANS L'EAU ET ENSEMBLE MATÉRIAU DE MODELAGE TRIDIMENSIONNEL ET PROCÉDÉ DE PRODUCTION D'UN MODÈLE TRIDIMENSIONNEL À L'AIDE DE CE DERNIER

(30) Priority: 01.12.2015 JP 2015234957
(43) Date of publication of application: 10.10.2018
(73) Proprietor: Ricoh Company, Ltd., Tokyo 143-8555 (JP)
(72) Inventor: SAITO, Akira, Tokyo 143-8555 (JP); SUZUKI, Yasuo, Tokyo 143-8555 (JP); NARUSE, Mitsuru, Tokyo 143-8555 (JP); TAMOTO, Nozomu, Tokyo 143-8555 (JP); HIGUCHI, Shinzo, Tokyo 143-8555 (JP)
(74) Representative: Fairbairn, Angus Chisholm
(86) International application number: PCT/JP2016/085363
(87) International publication number: WO 2017/094709

(56) References cited:
- EP-A1- 1 251 147
- EP-A1- 2 993 020
- EP-A1- 3 150 362
- WO-A1-2011/026719
- WO-A1-2012/167878
- CN-A- 105 585 804
- CN-A- 105 670 189
- CN-A- 106 189 009
- CN-A- 106 189 011
- JP-A- H0 748 475
- JP-A- 2008 507 619
- JP-A- 2009 501 743
- JP-A- 2010 215 867
- JP-A- 2014 516 061
- JP-A- 2016 056 353
- US-B1- 8 470 231

## Description

### Technical Field

The present invention relates to a water-disintegrable resin composition and a material set for producing a three-dimensional object using the same, and a three-dimensional object producing method.

### Background Art

Hitherto, in the fields of, for example, medical care, construction, or production, three-dimensional object producing techniques have been used in order to obtain products and parts having desired shapes. As an example, in a three-dimensional object producing technique by a fused deposition modeling (FDM) method, a filament-shaped resin composition called model material is conveyed by a conveying gear to a heating head through a conveying tube, fused, and discharged to form a layer having a predetermined shape, and this operation is repeated to laminate layers of the model material, to obtain an object having an intended three-dimensional shape. In this case, another shape is also produced with another filament-shaped resin composition called support material in the same manner as the model material to support the model maerial. This makes it possible to obtain a shape blooming in the layer laminating direction like a cup or an object having a torus shape like a handle.

In consideration of, for example, shapability and the function for supporting the model material during production, the support material needs to have heat fusibility and heat resistance. Further, in consideration of removal of the support material from the model material after production, the support material also needs to have easy removability.

As a support material for producing a three-dimensional object having these properties, water-soluble polyvinyl alcohol (PVA) filaments are commercially available. Because of the water-solubility, the filaments can be removed from the model material after production by contact with water.

However, filaments using such a water-soluble resin tend to form a shape commonly called lump. If a lump occurs, it is difficult to dissolve the whole of the filaments in water. Hence, the materials used in the support material end up adhering to the three-dimensional object, and a lot of efforts have been taken to detach the adherent matter. Many filaments per se can dissolve in water by immersion in water all night. However, once filaments have formed an object having a thickness or have formed the lump mentioned above, it takes a period amounting to a few days or longer for the support material to dissolve. This has been a serious problem.

As an alkali-soluble material for producing a three-dimensional object, a composition containing a plasticizer and a carboxylic acid-containing base polymer (specifically, a copolymer resin of methacrylic acid and methyl methacrylate) has been disclosed (for example, see Patent document 1). A support material formed of this composition is removed by dissolution in an alkaline solution. However, the alkaline solution needs to have pH of 11 or higher, and this has been a problem in terms of safety.

Furthermore, because methacrylic acid is hard, brittle, and extremely poorly flexible, the material may tear by folding during conveyance in production or may have troubles during conveyance through a conveying tube having a high curvature unless the material contains the plasticizer in a large amount. Moreover, when the plasticizer is mixed in a large amount, there may be a case where dischargeability of a fused liquid of the resin is degraded, particularly in a high-humidity environment.

Reference is also made to EP 3150362, EP 2993020 and US 8470231.

EP 3150362 has been published after the filing date of the present application and forms part of the prior art for the purposes of Article 54(3) EPC only. It describes, in particular in examples 3 and 4, a composition that comprises 70 parts by weight of a modified poly(vinyl alcohol) (PVOH) with pendant 1,2-diol moieties and 30 parts of an SEBS block copolymer having carboxyl groups. EP 2993020 has been published in the priority interval, before the filing date of the present application. It forms part of the prior art under Article 54(3) EPC only. It describes in claims 1 and 4 a water-decomposable composition comprising a PVOH and a resin that absorbs water. This second resin is preferably a poly(acrylic acid) (PAA).

US 8470231 describes in c. 7,1. 8-40, a support material for use in 3-D printing applications that comprises a water soluble polymer and an acid, such as tartaric acid.

### Citation List

### Patent Document

Patent document 1: Japanese Translation of PCT International Application Publication No. JP-T-2008-144773
Patent Document 2: EP 3150362 A1.
Patent Document 3: EP 2993020 A1.
Patent Document 4: US 8470231 B1.

### Summary of Invention

### Technical Problem

The present invention has an object to provide a water-disintegrable resin composition having an excellent water-disintegrability, an excellent removability as a support material, and an excellent conveyability attributable to a good flexibility.

### Solution to Problem

To realize the object described above, the present invention provides a water-disintegrable resin composition that includes at least a water-soluble resin (A), an acidic substance (B), an easily water-soluble substance (C), and a water-swellable substance (D), wherein the water-soluble resin (A) comprises at least one selected from the group consisting of polyvinyl alcohol, carboxymethyl cellulose, polyvinyl pyrrolidone, polyacrylic acid, polyvinyl sulfonic acid, polyethylene oxide, polyethylene glycol, maleic acid-based copolymers, and chitosans, wherein the easily water-soluble substance (C) comprises at least one selected from the group consisting of sucrose, potassium citrate, acetate, and potassium carbonate, and wherein the water-swellable substance (D) comprises at least one selected from the group consisting of cross-linked polyvinyl polypyrrolidone, sodium polyacrylate, cellulose, and starch.

### Effects of the Invention

The present invention can provide a water-disintegrable resin composition having an excellent water-disintegrability, an excellent removability as a support material, and an excellent conveyability attributable to a good flexibility.

### Brief Description of the Drawings

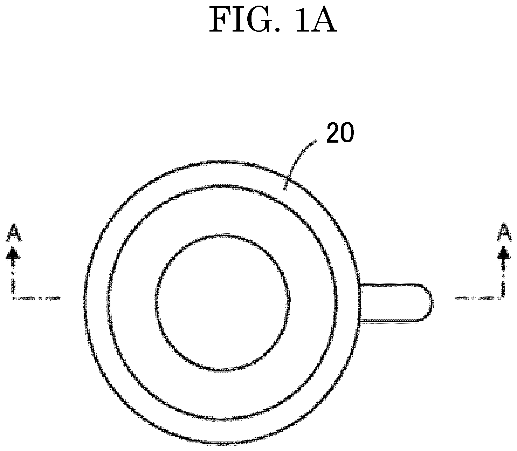

FIG. 1A is plan view illustrating an example of a three-dimensional object produced by using a water-disintegrable complex material of the present invention as a support forming material;

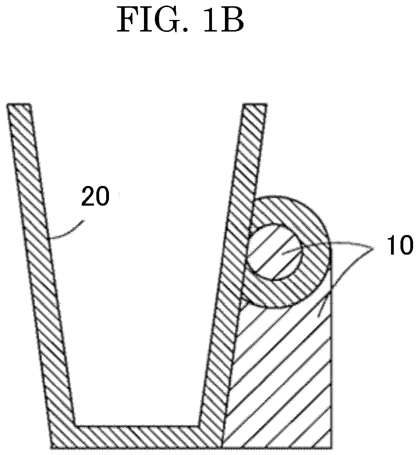

FIG. 1B is a cross-sectional view of the three-dimensional object of FIG. 1A taken along a line A-A'; and

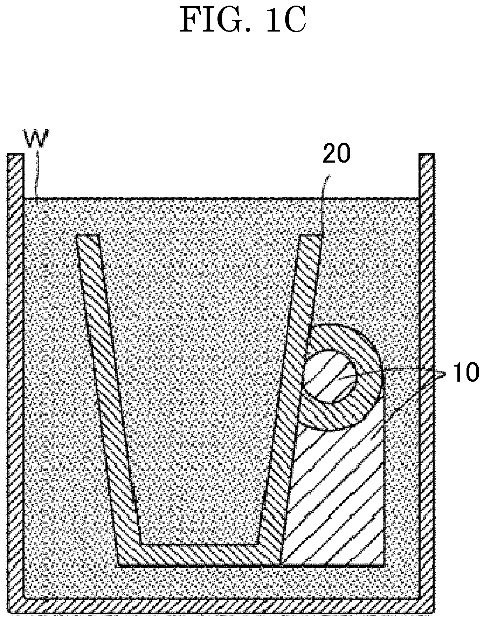

FIG. 1C is a schematic cross-sectional view illustrating an example of a step of removing a support of the three-dimensional object of FIG. 1A.

### Mode for Carrying out the Invention

An embodiment of the present invention will be described below. However, the present invention should not be construed as being limited to the embodiment described below.

### (Water-disintegrable resin composition)

A water-disintegrable resin composition of the present invention contains at least a water-soluble resin (A), an acidic substance (B), an easily water-soluble substance (C) and a water-swellable substance (D), and preferably further contains other components as needed.

### <Water-soluble resin (A)>

The water-soluble resin (A) is a resin that is soluble in water. The water-soluble resin (A) is preferably a resin that is soluble in water in a temperature range of from room temperature through the boiling point or the below-described aqueous solution (hereinafter may be referred to as support material dissolving liquid) for dissolving the composition of the present invention. The water-soluble resin (A) comprises at least one selected from the group consisting of polyvinyl alcohol (PVC), carboxymethyl cellulose (CMC), polyvinyl pyrrolidone (PVP), polyacrylic acid, polyvinyl sulfonic acid, polyethylene oxide (PEO), polyethylene glycol (PEG), maleic acid-based copolymers, and chitosans such as low-molecular-weight chitosans and chitosan salts. The resins mentioned above may be copolymers so long as the copolymers have water-solubility. To take polyvinyl alcohol for example, substances in which the amount of hydroxyl group called saponification degree is adjusted or substances enhanced in solubility in the form of copolymers with, for example, butanediol may be used.

### <Acidic substance (B)>

For example, the acidic substance (B) is at least one selected from the group consisting of inorganic acidic substances and organic acidic substances.

Examples of the inorganic acidic substances include phosphoric acids. Examples of the organic acidic substances include carboxylic acids such as carboxylic acid and carboxylic anhydrides, or metal salts of carboxylic acid and carboxylic anhydrides.

The carboxylic acids have pH levels close to the neutral level and are preferable because the carboxylic acids have a mild reactivity with the support material dissolving liquid when, for example, the support material dissolving liquid is alkaline. Among the carboxylic acids, at least one selected from the group consisting of citric acid, maleic acid or maleic anhydride, fumaric acid, oxalic acid, benzoic acid, pyruvic acid, and amino acid is/are preferable. As the amino acid, for example, aspartic acid and glycine are preferable in terms of availability, cost performance, and safety.

The content of the acidic substance (B) in the composition of the present invention is preferably 1% by mass or greater and more preferably 1% by mass or greater but 50% by mass or less relative to the water-soluble resin (A) in terms of disintegrability of the composition.

The composition of the present invention contains the easily water-soluble substance (C) and the water-swellable substance (D) in order to be further enhanced in water-disintegrability.

### <Easily water-soluble substance (C)>

Easy water-solubility of the easily water-soluble substance (C) refers to a property that allows the mixture liquid to maintain a uniform appearance even after the mixture liquid has ceased to flow after gently stirred with the same volume of pure water at 1 atm at a temperature of 20 degrees C, as provided by Fire Service Act. In the present invention, the easily water-soluble substance (C) may be a substance that does not completely dissolve in water but quickly disperses in water in the form of particles. Such a substance can also be used as the easily water-soluble substance (C).

As the easily water-soluble substance (C), at least one selected from the group consisting of sucrose, potassium citrate, acetate, and potassium carbonate is used in terms of availability and safety.

The content of the easily water-soluble substance (C) in the composition of the present invention is 5% by mass or greater and more preferably 5% by mass or greater but 90% by mass or less relative to the water-soluble resin (A) in terms of disintegrability of the composition.

### <Water-swellable substance (D)>

The water-swellable substance (D) is a substance that has a three-dimensional structure and takes in water molecules into the gaps in the structure upon contact with water to undergo volume increase. The amount of water taken into the water-swellable substance (D) is preferably 0.5% by mass or greater relative to the water-swellable substance (D). The water-swellable substance (D) used in the present invention is at least one selected from the group consisting of cross-linked polyvinyl polypyrrolidone (PVPP), sodium polyacrylate, cellulose, and starch in terms of availability and safety.

The content of the water-swellable substance (D) is preferably 1% by mass or greater and more preferably 1% by mass or greater but 50% by mass or less relative to the water-soluble resin (A) in terms of disintegrability of the composition.

Polylactic acid can also be used because polylactic acid also has water-swellability. As the method for using polylactic acid, for example, there is a method of introducing polylactic acid having a high crystallinity into the center of the water-soluble resin (A) while spinning and weaving the polylactic acid and making the yarns of the polylactic acid loosen upon contact with water to additionally increase disintegrability.

### <Other components>

The other components are not particularly limited and may be appropriately selected depending on the intended purpose. Examples of the other components include a colorant, a dispersant, and a plasticizer.

The water-disintegrable resin composition of the present invention is particularly preferable for use as a material for producing a three-dimensional object.

A three-dimensional object of the present invention can be produced by, after producing an object with a model material, bringing the water-disintegrable resin composition of the present invention used as a support material for the model material into contact with water to disintegrate the support material.

As a method for producing an object, it is possible to employ, for example, a binder jet method, a directed energy deposition method, and a material jet method specified in ASTM in addition to the method of molding the composition of the present invention into a filament shape (for example, with a diameter of 1.75 mm or 3 mm) and applying the FDM.

Examples of the support material dissolving liquid, which is an aqueous solution for dissolving the support material formed of the composition of the present invention, include water and preferably a carbonate-containing aqueous solution. Examples of the carbonate-containing aqueous solution include an aqueous solution containing a metal carbonate. Examples of the metal carbonate include sodium bicarbonate, potassium bicarbonate, sodium carbonate, and potassium carbonate. These metal carbonates are excellent in safety and environmentally advantageous. For example, sodium bicarbonate is used as a food additive and particularly excellent in safety. The concentration of the metal carbonate in the support material dissolving liquid is, for example, preferably 1% by mass or greater and more preferably 1% by mass or greater but 50% by mass or less.

The water-disintegrable resin composition of the present invention and the support material dissolving liquid may be used as a material set for producing a three-dimensional object, and after an object is produced with a model material, the support material may be brought into contact with the support material dissolving liquid in order to be disintegrated by a bubbling property. This is preferable because the support material can be quickly removed (the time needed for removal can be reduced to from 1/2 through 1/10 of the time needed in existing techniques) and a three-dimensional object can be produced easily.

A model material for a three-dimensional object of the present invention is not particularly limited and may be appropriately selected depending on the intended purpose. For example, a known water-insoluble resin may be used. The specific shape of the three-dimensional object is not particularly limited and may be a desired shape.

Next, a method for producing a three-dimensional object using the support material will be described with reference to FIG. 1A to FIG. 1C. FIG. 1A to FIG. 1C are views illustrating an example of a three-dimensional object producing method.

In the case of using the support material, there is a need for using at least 2 head nozzles for the model material and the support material. FIG. 1A is a plan view of the three-dimensional object including the support material. FIG. 1B is a cross-sectional view taken along a line A-A. In the case of producing a three-dimensional object having the shape illustrated in FIG. 1A and FIG. 1B, layers of each of the model material 20 and the support material 10 are repeatedly laminated by a known method to produce the shapes illustrated in FIG. 1B. As a result, an integrated three-dimensional object formed of the model material 20 and the support material 10 is obtained. Unless the support material 10 is used, it is impossible to produce the handle portion.

FIG. 1C illustrates an example of a method for subsequently removing the support material 10 from the obtained three-dimensional object. When the obtained three-dimensional object is immersed in a container filled with the support material dissolving liquid, only the support material 10 dissolves in the support material dissolving liquid. Therefore, the support material can be neatly removed, and the three-dimensional object produced with the model material 20 can be obtained.

### Examples

The present invention will be described below more specifically by way of Examples, Reference Examples and Comparative Examples. The present invention should not be construed as being limited to these Examples.

### (Examples 11 and 12, Reference Examples 1 to 10 and 13 to 17 and Comparative Examples 1 to 6)

The materials mentioned below were used in Examples, Reference Examples and Comparative Examples.
- Water-soluble resin (A)-
   - Polyvinyl alcohol (PVA) (available from Kuraray Co., Ltd., POVAL TC253)
   - Carboxymethyl cellulose (CMC) (available from Daicel Corporation, CMC DAICEL 1120)
   - Polyvinyl pyrrolidone (PVP)
   - Polyethylene oxide (PEO)
- Acidic substance (B)-
   - Citric acid (available from Tokyo Chemical Industry Co., Ltd.)
   - Benzoic acid (available from Tokyo Chemical Industry Co., Ltd.)
   - Glycine (available from Tokyo Chemical Industry Co., Ltd.)
   - Maleic acid
   - Oxalic acid
   - Pyruvic acid
- Easily water-soluble substance (C)-
   - Sucrose (available from Tokyo Chemical Industry Co., Ltd.)
   - Potassium citrate (available from Tokyo Chemical Industry Co., Ltd.)
   - Potassium carbonate (available from Tokyo Chemical Industry Co., Ltd.)
   - Sodium bicarbonate (available from Tokyo Chemical Industry Co., Ltd.)
- Water-swellable substance (D)-
   - Cross-linked polyvinyl polypyrrolidone (PVPP) (available from BASF, DAIKABAN F)
   - Cellulose powder (available from Nippon Paper Group, Inc., KC FLOC W50-GK)

These materials were used in the addition amounts (% by mass) presented in Table 1 and kneaded with a microhanger thermo Hakke minilab biaxial extruder, to produce simple filaments. Subsequently, using the simple filaments and EXTRUDER NOZZLE PRO for 3D filament material production available from Nihon Binary Co., Ltd., filaments that had a diameter of about 1.75 mm and were to be used in FDM for producing a three-dimensional object were produced at a melting temperature of 200 degrees C at a discharging speed of 0.5 m/minute. In Comparative Example 4, commercially available filaments for producing a three-dimensional object available from Leapfrog (hereinafter referred to as LF) and having a diameter of about 1.75 mm (containing PVA, free of an acidic substance (B)) were used. Subsequently, using these filaments and LEAPFROG CLEATR HS, a circular disk having a diameter of 5 cm and a height of 2 mm was produced by FDM (with discharging conditions: head temperature of 200 degrees C, bed temperature of 45 degrees C, object producing speed of 3,000 mm/minute, and lamination pitch of 0.1 mm).

### <Evaluation of dissolution time>

A test piece of the object was put on a plastic petri dish formed of polyethylene. Into the petri dish, hot water of 80 degrees C or a sodium bicarbonate aqueous solution having a concentration of 20% by mass was added as the support material dissolving liquid in an amount 5 times as great as the mass of the test piece.

The test piece and the support material dissolving liquid in the petri dish were gently stirred, and a period of time for which the support material dissolving liquid maintained a uniform appearance after the support material dissolving liquid ceased to flow was measured. This period of time is presented in Table 2 as a dissolution time.

### <Evaluation of removal time>

A time taken for the test piece to be removed from the bottom surface of the petri dish by the support material dissolving liquid is presented in Table 2 as a removal time. The time at which it is determined that the test piece was removed by the support material dissolving liquid was the time when, after the liquid in the petri dish was removed to another container after a predetermined time passed from when the test piece and the support material dissolving liquid came into contact with each other, the mass of the petri dish became equal to the initial mass of the petri dish before the test piece was put, via wiping of the water content in the petri dish with a paper waste cloth (KIMWIPE).

In Table 2, additionally, a removal time when the sodium bicarbonate aqueous solution having a concentration of 20% by mass was used as the support material dissolving liquid is indicated as A when the removal time was less than 0.5 times as long as the removal time in Comparative Example 1 or 2, as B when the removal time was greater than or equal to 0.5 times but less than 1.0 time as long as the removal time in Comparative Example 1 or 2, and as C when the removal time was greater than or equal to 1.0 time as long as the removal time in Comparative Example 1 or 2. Note that the removal times for removing the test pieces including the same water-soluble resin (A) were compared.

### <Flexibility>

Each of the filaments prepared as above was folded by 90 degrees, retained in the state for 10 seconds, and then unfolded. In Table 2, additionally, any filament that maintained a restoring force without a folding trace when this step was repeated 3 times is indicated as B, and any filament that had a trace or was broken when this step was repeated 3 times was indicated as C as flexibility evaluation. A filament that achieved a flexibility evaluation of B can be judged to be non-constrained in application of FDM, whereas a filament that achieved a flexibility evaluation of C is unstable as a product because such a filament may be the cause of clogging or a conveying failure.

**Table 1**

| | Water-disintegrable resin composition | | | | | | |
|---|---|---|---|---|---|---|---|
| | Water-solu ble resin (A) | Acidic substance (B) | | Easily water-soluble substance (C) | | Water-swellable substance (D) | |
| | Substance name | Substance name | Addition amount (% by mass) relative to (A) | Substance name | Addition amount (% by mass) relative to (A) | Substance name | Addition amount (% by mass) relative to (A) |
| Ref. Ex. 1 | PVA | Citric acid | 5 | - | - | - | - |
| Ref. Ex. 2 | PVA | Citric acid | 20 | - | - | - | - |
| Ref. Ex. 3 | PVA | Citric acid | 20 | Sucrose | 5 | - | - |
| Ref. Ex. 4 | PVA | Citric acid | 20 | Sucrose | 20 | - | - |
| Ref. Ex. 5 | PVA | Citric acid | 1 | Sucrose | 20 | - | - |
| Ref. Ex. 6 | CMC | Citric acid | 20 | Sucrose | 20 | - | - |
| Ref. Ex. 7 | PVA | Benzoic acid | 20 | Sucrose | 20 | - | - |
| Ref. Ex. 8 | PVA | Glycine | 20 | Sucrose | 20 | - | - |
| Ref. Ex. 9 | PVA | Citric acid | 20 | Potassium citrate | 20 | - | - |
| Ref. Ex. 10 | PVA | Citric acid | 20 | Potassium carbonate | 20 | - | - |
| Ex. 11 | PVA | Citric acid | 20 | Sucrose | 20 | PVPP | 10 |
| Ex. 12 | PVA | Citric acid | 20 | Sucrose | 20 | Cellulose powder | 10 |
| Ref. Ex. 13 | PVA | Meleic acid | 20 | Sucrose | 20 | - | - |
| Ref. Ex. 14 | PVA | Oxalic acid | 20 | Sucrose | 20 | - | - |
| Ref. Ex. 15 | PVA | Pyruvic acid | 20 | Sucrose | 20 | - | - |
| Ref. Ex. 16 | PVP | Citric acid | 20 | Sucrose | 20 | - | - |
| Ref. Ex. 17 | PEO | Citric acid | 20 | Sucrose | 20 | - | - |
| Comp. Ex. 1 | PVA | - | - | - | - | - | - |
| Comp. Ex. 2 | CMC | - | - | - | - | - | - |
| Comp. Ex. 3 | PVA | - | - | Sodium bicarbonate | 20 | - | - |
| Comp. Ex. 4 | Support material available from LF | | | | | | |
| Comp. Ex. 5 | PVP | - | - | Sodium bicarbonate | 20 | - | - |
| Comp. Ex. 6 | PEO | - | - | Sodium bicarbonate | 20 | - | - |

**Table 2**

| | Dissolution time [min] | | Removal time [min] | | Evaluation of removal time | Flexibility |
|---|---|---|---|---|---|---|
| | Support material dissolving liquid | | Support material dissolving liquid | | | |
| | Hot water of 80 degrees C | 20% by mass NaHCO₃ aqueous solution | Hot water of 80 degrees C | 20% by mass NaHCO₃ aqueous solution | | |
| Ref. Ex. 1 | 540 | 380 | 540 | 180 | A | B |
| Ref. Ex. 2 | 480 | 300 | 400 | 90 | A | B |
| Ref. Ex. 3 | 400 | 280 | 350 | 80 | A | B |
| Ref. Ex. 4 | 340 | 220 | 300 | 45 | A | B |
| Ref. Ex. 5 | 480 | 320 | 400 | 280 | A | B |
| Ref. Ex. 6 | 240 | 120 | 200 | 30 | A | B |
| Ref. Ex. 7 | 380 | 240 | 350 | 120 | A | B |
| Ref. Ex. 8 | 360 | 240 | 340 | 100 | A | B |
| Ref. Ex. 9 | 260 | 130 | 240 | 60 | A | B |
| Ref. Ex. 10 | 240 | 120 | 220 | 50 | A | B |
| Ex. 11 | 200 | 100 | 180 | 20 | A | B |
| Ex. 12 | 200 | 100 | 180 | 20 | A | B |
| Ref. Ex. 13 | 540 | 370 | 540 | 50 | A | B |
| Ref. Ex. 14 | 540 | 330 | 540 | 30 | A | B |
| Ref. Ex. 15 | 540 | 390 | 540 | 70 | A | B |
| Ref. Ex. 16 | 720 | 370 | 600 | 70 | A | B |
| Ref. Ex. 17 | 530 | 270 | 600 | 40 | A | B |
| Comp. Ex. 1 | 600 | 600 | 600 | 600 | Standard STD | B |
| Comp. Ex. 2 | 480 | 480 | 480 | 480 | Standard STD | B |
| Comp. Ex. 3 | - | - | - | - | - | C |
| Comp. Ex. 4 | 600 | 600 | 600 | 600 | C | B |
| Comp. Ex. 5 | 730 | 730 | 730 | 730 | - | C |
| Comp. Ex. 6 | 550 | 550 | 550 | 550 | - | C |

From the results in Table 1 and Table 2, in Reference Examples and Examples, evaluations of the removal time and flexibility both achieved good results, whereas in Comparative Example 3, sodium bicarbonate bubbled during preparation of the filaments to make the filaments brittle, and the filaments were broken when introduced into a device and failed to be set in the device, making it impossible to produce a test piece.

In Comparative Example 4, the dissolution time and the removal time were the same as in Comparative Example 1.

### Description of the Reference Numeral

10: support material
20: model material
W: support material dissolving liquid

## Claims

1. A water-disintegrable resin composition comprising:
a water-soluble resin (A);
an acidic substance (B);
an easily water-soluble substance (C); and
a water-swellable substance (D),
wherein the water-soluble resin (A) comprises at least one selected from the group consisting of polyvinyl alcohol, carboxymethyl cellulose, polyvinyl pyrrolidone, polyacrylic acid, polyvinyl sulfonic acid, polyethylene oxide, polyethylene glycol, maleic acid-based copolymers, and chitosans,
wherein the easily water-soluble substance (C) comprises at least one selected from the group consisting of sucrose, potassium citrate, acetate, and potassium carbonate, and
wherein the water-swellable substance (D) comprises at least one selected from the group consisting of cross-linked polyvinyl polypyrrolidone, sodium polyacrylate, cellulose, and starch.

2. The water-disintegrable resin composition according to claim 1,
wherein the acidic substance (B) comprises at least one selected from the group consisting of an inorganic acidic substance and an organic acidic substance, and
wherein a content of the acidic substance (B) is 1% by mass or greater relative to the water-soluble resin (A).

3. The water-disintegrable resin composition according to claim 2,
wherein the acidic substance (B) comprises at least one selected from the group consisting of citric acid, maleic acid or maleic anhydride, fumaric acid, oxalic acid, benzoic acid, pyruvic acid, and amino acid.

4. The water-disintegrable resin composition according to any one of claims 1 to 3, wherein a content of the easily water-soluble substance (C) is 5% by mass or greater relative to the water-soluble resin (A).

5. The water-disintegrable resin composition according to any one of claims 1 to 4, wherein a content of the water-swellable substance (D) is 1% by mass or greater relative to the water-soluble resin (A).

6. Use of the water-disintegrable resin composition according to any one of claims 1 to 5, as a material for producing a three-dimensional object.

7. A material set for producing a three-dimensional object, the material set comprising:
the water-disintegrable resin composition according to any one of claims 1 to 5; and
a carbonate-containing aqueous solution.

8. A three-dimensional object producing method comprising
after producing an object with a model material, bringing a support material for the model material into contact with water to disintegrate the support material,
wherein the support material is the water-disintegrable resin composition according to any one of claims 1 to 5.

9. The three-dimensional object producing method according to claim 8, further comprising
after producing an object with the model material, bringing the support material into contact with the carbonate-containing aqueous solution included in the material set for producing a three-dimensional object according to claim 7 to disintegrate the support material.

## Patentansprüche

1. In Wasser zersetzbare Harzzusammensetzung, Folgendes umfassend:
ein wasserlösliches Harz (A);
eine saure Substanz (B);
eine leicht wasserlösliche Substanz (C); und
eine in Wasser quellbare Substanz (D),
wobei das wasserlösliche Harz (A) mindestens eines umfasst, ausgewählt aus der Gruppe, bestehend aus Polyvinylalkohol, Carboxymethylzellulose, Polyvinylpyrrolidon, Polyacrylsäure, Polyvinylsulfonsäure, Polyethylenoxid, Polyethylenglycol, Copolymere auf Maleinsäurebasis und Chitosan,
wobei die leicht wasserlösliche Substanz (C) mindestens eines umfasst, ausgewählt aus der Gruppe, bestehend aus Sukrose, Kaliumcitrat, Acetat und Kaliumcarbonat, und
wobei die in Wasser quellbare Substanz (D) mindestens eines umfasst, ausgewählt aus der Gruppe, bestehend aus vernetztem Polyvinylpolypyrrolidon, Natriumpolyacrylat, Cellulose und Stärke.

2. In Wasser zersetzbare Harzzusammensetzung nach Anspruch 1,
wobei die saure Substanz (B) mindestens eines umfasst, ausgewählt aus der Gruppe, bestehend aus einer anorganischen sauren Substanz und einer organischen sauren Substanz, und
wobei ein Gehalt an saurer Substanz (B) 1 Gewichtsprozent oder darüber in Bezug auf das wasserlösliche Harz (A) beträgt.

3. In Wasser zersetzbare Harzzusammensetzung nach Anspruch 2,
wobei die saure Substanz (B) mindestens eines umfasst, gewählt aus der Gruppe, bestehend aus Zitronensäure, Maleinsäure oder Maleinanhydrid, Fumarsäure, Oxalsäure, Benzoesäure, Pyruvinsäure und Aminosäure.

4. In Wasser zersetzbare Harzzusammensetzung nach einem der Ansprüche 1 bis 3,
wobei ein Gehalt an leicht wasserlöslicher Substanz (C) 5 Gewichtsprozent oder darüber in Bezug auf das wasserlösliche Harz (A) beträgt.

5. In Wasser zersetzbare Harzzusammensetzung nach einem der Ansprüche 1 bis 4,
wobei ein Gehalt an in Wasser quellbarer Substanz (D) 1 Gewichtsprozent oder darüber in Bezug auf das wasserlösliche Harz (A) beträgt.

6. Gebrauch der in Wasser zersetzbaren Harzzusammensetzung nach einem der Ansprüche 1 bis 5 als ein Material zum Herstellen eines dreidimensionalen Objekts.

7. Materialset zum Herstellen eines dreidimensionalen Objekts, wobei das Materialset Folgendes umfasst:
die in Wasser zersetzbare Harzzusammensetzung nach einem der Ansprüche 1 bis 5;
und eine carbonathaltige wässrige Lösung.

8. Verfahren zum Herstellen eines dreidimensionalen Objekts, Folgendes umfassend:
nach dem Herstellen eines Objekts mit einem Modellmaterial, Inkontaktbringen eines Untergrundmaterials für das Modellmaterial mit Wasser zum Zersetzen des Untergrundmaterials,
wobei das Untergrundmaterial die in Wasser zersetzbare Harzzusammensetzung nach einem der Ansprüche 1 bis 5 ist.

9. Verfahren zum Herstellen eines dreidimensionalen Objekts nach Anspruch 8, ferner Folgendes umfassend:
nach dem Herstellen eines Objekts mit dem Modellmaterial, Inkontaktbringen des Untergrundmaterials mit der carbonathaltigen wässrigen Lösung, welche in dem Materialset zum Herstellen eines dreidimensionalen Objekts nach Anspruch 7 eingeschlossen ist, zum Zersetzen des Untergrundmaterials.

## Revendications

1. Composition de résine désintégrable dans l'eau comprenant :
une résine soluble dans l'eau (A) ;
une substance acide (B) ;
une substance facilement soluble dans l'eau (C) ; et
une substance gonflant à l'eau (D),
dans laquelle la résine soluble dans l'eau (A) comprend au moins un composant choisi dans le groupe constitué par : alcool polyvinylique, carboxyméthylcellulose, polyvinylpyrrolidone, acide polyacrylique, acide polyvinylsulfonique, poly(oxyde d'éthylène), polyéthylène glycol, copolymères à base d'acide maléique, et chitosanes,
dans laquelle la substance facilement soluble dans l'eau (C) comprend au moins un composant choisi dans le groupe constitué par : sucrose, citrate de potassium, acétate, et carbonate de potassium, et
dans laquelle la substance gonflant à l'eau (D) comprend au moins un composant choisi dans le groupe constitué par : polyvinylpolypyrrolidone réticulée, polyacrylate de sodium, cellulose, et amidon.

2. Composition de résine désintégrable dans l'eau selon la revendication 1,
dans laquelle la substance acide (B) comprend au moins un composant choisi dans le groupe constitué par une substance acide inorganique et une substance acide organique, et
dans laquelle une teneur en substance acide (B) est de 1 % en masse ou plus par rapport à la résine soluble dans l'eau (A).

3. Composition de résine désintégrable dans l'eau selon la revendication 2,
dans laquelle la substance acide (B) comprend au moins un composant choisi dans le groupe constitué par : acide citrique, acide maléique ou anhydride maléique, acide fumarique, acide oxalique, acide benzoïque, acide pyruvique, et acide aminé.

4. Composition de résine désintégrable dans l'eau selon l'une quelconque des revendications 1 à 3,
dans laquelle une teneur en substance facilement soluble dans l'eau (C) est de 5 % en masse ou plus par rapport à la résine soluble dans l'eau (A).

5. Composition de résine désintégrable dans l'eau selon l'une quelconque des revendications 1 à 4,
dans laquelle une teneur en substance gonflant à l'eau (D) est de 1 % en masse ou plus par rapport à la résine soluble dans l'eau (A).

6. Utilisation de la composition de résine désintégrable dans l'eau selon l'une quelconque des revendications 1 à 5, comme matériau permettant de produire un objet tridimensionnel.

7. Ensemble de matériaux permettant de produire un objet tridimensionnel, l'ensemble de matériaux comprenant :
la composition de résine désintégrable dans l'eau selon l'une quelconque des revendications 1 à 5 ; et
une solution aqueuse contenant du carbonate.

8. Procédé de production d'un objet tridimensionnel comprenant :
après la production d'un objet à l'aide d'un matériau de modelage, la mise en contact d'un matériau support pour ledit matériau de modelage avec de l'eau afin de désintégrer le matériau support,
dans lequel le matériau support est la composition de résine désintégrable dans l'eau selon l'une quelconque des revendications 1 à 5.

9. Procédé de production d'un objet tridimensionnel selon la revendication 8, comprenant en outre :
après la production d'un objet à l'aide du matériau de modelage, la mise en contact du matériau support avec la solution aqueuse contenant du carbonate incluse dans l'ensemble de matériaux permettant de produire un objet tridimensionnel selon la revendication 7 afin de désintégrer le matériau support.
